# EUROPÄISCHE PATENTANMELDUNG

(11) **EP 0 855 330 A1**
(43) Veröffentlichungstag der Anmeldung: **29.07.1998**
(21) Anmeldenummer: 98100755.2
(22) Anmeldetag: 16.01.1998
(51) Int. Cl.: B62B 3/04

(54) **Kipp- und Transportvorrichtung für Flügel**

(30) Priorität: 26.01.1997 DE 29701713 U
(71) Anmelder: B. & K. Baumgärtel GmbH, 07552 Gera (DE)
(72) Erfinder: Seibert, Wolfgang, 13583 Berlin (DE)
(74) Vertreter: Amthor, Manfred W. J.

(57) **Zusammenfassung**

Zur manuellen Verbringung eines Flügels aus der normalen Standposition in eine hochkante Transport- und Lagerposition, oder umgekehrt, ist die mit einem festen Raduntersatz ausgerüstete Kipp- und Transportvorrichtung mit der langen Wand des Korpus ausschließlich über einstellbaren Reibschluß lösbar verbunden. Ein an mindestens einem Längsende der Vorrichtung befestigbarer, über mindestens einen Rollwinkel von 90 Grad reichender Rollkörper mit dem Rollradius von etwa einer Standfußlänge, ermöglicht eine relativ mühelose, sichere und schonende Schwenkung des Flügels, wie auch einen unmittelbar anschließenden Rolltransport auf dem Raduntersatz, völlig ohne Beteiligung seiner montierten Standfüße.

## Beschreibung

Die Erfindung betrifft eine Kipp- und Transportvorrichtung für einen Flügel, dessen Korpus unterseitig mit drei Standfüßen lösbar verbunden und auf seiner langen Wand hochkant transportierbar und lagerfähig ist.
Zum Transportieren von Flügeln ist es bekannt, vorbereitend am Korpus seitlich im Bereich der langen Wand einen sogenannten Schlitten zu befestigen. Dieser Schlitten ist im wesentlichen L-förmig ausgebildet und bedeckt teilweise mit seiner großflächigeren L-Seite unter Zwischenlage einer Polsterschicht die äußere lackierte, polierte oder furnierte Fläche der langen Wand des Korpus, während die schmalere L-Seite mit Löchern versehen ist, durch die in die Unterkante der langen Wand eingreifende Befestigungsschrauben hindurchtreten. Mittels dieser Befestigungsschrauben ist der Schlitten starr mit dem Korpus verbunden.
Auf der dem Korpus abgewandten großflächigeren Seite des Schlittens ist dieser mit vorspringenden Längskufen versehen, die eine solche Höhe bezüglich der Korpus- bzw. Flügeldeckelkanten haben, daß eine mechanische Beschädigung beim Kippen und Transportieren vermieden wird.

Zum Kippen des auf den Standfüßen ruhenden Flügels wird der linke vordere Standfuß im Bereich des die Klaviatur tragenden Stuhlbodens entfernt, z.B. abgeschraubt, was die Mithilfe mehrerer Personen erfordert. Nach dem Entfernen des einen Standfußes wird der Flügel vorsichtig auf die am Stuhlboden befestigte, das Pedalwerk enthaltende Lyra aufgesetzt und sodann über die Lyra und den hinteren Standfuß auf den Schlitten gekippt. Wegen des erheblichen Gewichts des Flügels sind bei dieser Arbeit mindestens zwei kräftige Personen erforderlich.

Nach vollendeter Kippbewegung steht der Flügel hochkant mit vertikal verlaufender Klaviatur; zum Transportieren wird anschließend der Flügel hochkant gemeinsam mit dem Schlitten auf einen sogenannten Hund gesetzt, der eine Tragfläche von etwa 30 x 60 cm aufweist, an der bodenseitig vier Rollen befestigt sind. Der Hund wird unterhalb des Schwerpunkts des Flügels so angeordnet, daß durch Wippbewegungen die Lenkung während des Transportes ermöglicht wird.

Ausgehend vom Bekannten besteht nun die Aufgabe, eine Kipp- und Transportvorrichtung anzugeben, die einfach und mit geringem Personal- und Kraftaufwand zu handhaben ist.
Diese Aufgabe wird erfindungsgemäß gelöst durch einen im wesentlichen U-förmigen Träger, dessen U-Basis und U-Schenkel zum Umgreifen des Korpus an der langen Wand an mindestens drei Seiten bestimmt ist, dessen Längsachse der größten Abmessung der langen Wand entsprechend langgestreckt ausgebildet und dessen U-Basis auf ihrer dem Korpus abgewandten Seite mit mindestens drei eine Rollfläche definierenden Lenkrollen ausgestattet ist, und durch einen transversal zur Längsachse des U-förmigen Trägers orientierten und mit diesem lösbar verbundenen scheiben- oder radartigen, sektorförmigen Rollkörper mit einem der Höhe eines Standfußes entsprechenden Radius und mit einer etwa viertelkreisförmigen Außenkontur, die tangential in die Rollfläche einläuft, wobei der Mittelpunkt und eine Sektorkante des Rollkörpers in der Ebene des zur Anlage mit der Korpusunterseite bestimmten U-Schenkels des Trägers angeordnet ist.

Durch Anwendung der Erfindung besteht die Möglichkeit, die Anbringung des Trägers und des mit diesem lösbar verbundenen Rollkörpers durch eine einzige Bedienungsperson vornehmen zu lassen. Die Kippbewegung der am Flügel insbesondere durch Reibschluß befestigten Kipp- und Transportvorrichtung kann ebenfalls durch eine einzige Bedienungsperson vorgenommen werden. Damit entfallen zum einen die bisher notwendigen Schraubenlöcher in der langen Wand. Zum anderen ist der Personal- und Kraftaufwand so sehr verringert, daß selbst ein Laie die Kippbewegung gefahrlos ausführen kann.

Die Handhabung der erfindungsgemäßen Kipp- und Transportvorrichtung kann vorteilhaft dadurch verbessert werden, daß der U-förmige Träger in Längsrichtung in zwei Trägerstücke geteilt ist, die durch eine Teleskopstange miteinander längsverstellbar und feststellbar verbunden sind. Mit dieser Maßnahme ist die Vorrichtung nicht nur im Gewicht reduziert, sondern zugleich auch an unterschiedliche Flügelgrößen anpassbar. Bei Konzertflügeln ist die Teleskopstange auf ihre größte Länge ausgezogen und fixiert, während sie beim Transportieren von Stutzflügeln in ihre kleinste Länge überführt ist.

Vorteilhaft ist das erste der Trägerstücke zur Aufnahme des klaviaturseitigen Endes des Korpus bestimmt und mit mindestens zwei der Lenkrollen ausgestattet. Der besondere Vorteil besteht in der günstigen Lenkbarkeit des hochkant gestellten Flügels beim Transport.
Dieser Vorteil läßt sich weiter steigern, wenn das zweite der Trägerstücke zur Aufnahme des klaviaturfernen Endes des Korpus bestimmt und mit mindestens einer der Lenkrollen versehen ist. Auf Wippbewegungen beim Verfahren des Flügels kann sodann verzichtet werden. Außerdem ist auch der Lenkradius und damit der Platzbedarf beim Rangieren in günstiger Weise verringert.

Wenn man, wie es bei einer bevorzugten Ausführungsform des Erfindungsgedankens vorgesehen ist, den Rollkörper mit dem ersten der Trägerstücke lösbar verbindet, so besteht der Vorteil, für mehrere Träger nur einen einzigen Rollkörper vorhalten zu müssen, da dieser nur bei der Kippbewegung, dagegen nicht bei Transportbewegungen, gebraucht wird.

Zur Schonung der meist empfindlichen äußeren Korpusflächen ist vorteilhaft die U-Basis des Trägers mit einer Holzplatte aus mehrschichtig verleimtem Buchenholz ausgestattet, die auf der dem Korpus zugewandten Fläche mit einem Filzbelag versehen ist.
Außerdem können mit gleichem Vorteil auch die beiden U-Schenke auf den einander zugewandten Flächen einen Filzbelag aufweisen. Dabei ist bevorzugt der erste, zur Anlage mit der Korpusunterseite bestimmte U-Schenkel, starr mit der U-Basis des Trägers verbunden, während der zweite, der Korpusunterseite abgewandte U-Schenkel quer zur Längsachse des U-för-migen Trägers verschiebbar und mittels einer an der U-Basis verankerten Verstellschraube verstellbar geführt ist. Damit kann der Korpus unter Reibschluß am Träger festgelegt werden, wodurch aufwendigere Befestigungsmittel entbehrlich sind.
Die zuvor beschriebene Lösbarkeit des Rollkörpers vom Träger ist besonders günstig erzielbar, wenn der Rollkörper mit einem vorspringenden, transversal zur Ebene des Mittelpunktes und der Sektorkante verlaufenden Dorn ausgestattet ist, der in eine quer zur Längsrichtung des Trägers angeordnete Buchse der U-Basis einsteckbar und darin verriegelbar ist. Für einen Flügel mit abgenommenem Deckel ist die erfindungsgemäße Kipp- und Transport-vorrichtung besonders günstig gestaltet, wenn der zweite U-Schenkel an seiner freien Endkante eine Verstellschraube aufweist, die zur reibschlüssigen Festlegung der deckelseitigen Kante der langen Wand Verstellschraube auf der der deckelseitigen Kante zugewandten Seite mit einem Polster versehen sein.

Weitere Einzelheiten und Ausgestaltungen der erfindungsgemäßen Kipp- und Transportvorrichtung, sowie deren Wirkungsweise, ergeben sich anhand der Zeichnung aus der nachstehenden Figurenbeschreibung.

Die Fig. 1 zeigt in einer Perspektivdarstellung einen Flügel mit einer Kipp- und Transportvorrichtung schematisch, jedoch lediglich mit den zum Verständnis der Erfindung erforderlichen Teilen.

In Fig. 2 ist in einer der-Fig. 1 ähnlichen, jedoch um 90' gekippten Perspektivdarstellung die erfindungsgemäße Kipp- und Transportvorrichtung mit allen wesentlichen Teilen schematisch dargestellt.

Die Figuren 3 und 4 zeigen Ansichten von besonderen Teilen der Kipp- und Transportvorrichtung.

Die Fig. 5 zeigt eine zu den Figuren 2 und 3 gehörende Einzelheit.

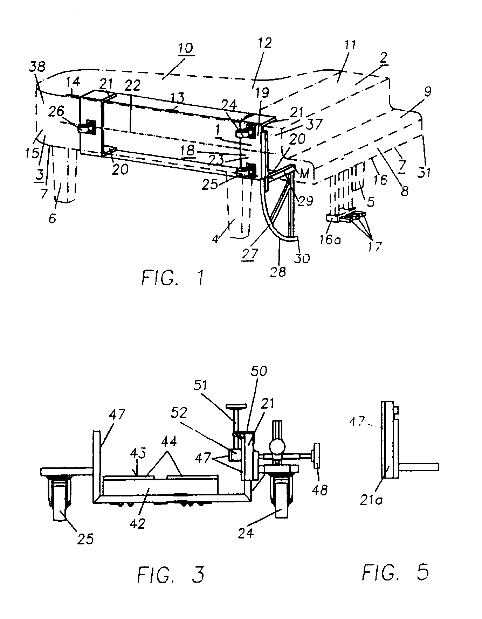

Die Fig. 1 zeigt eine Kipp- und Transportvorrichtung 1 für einen Flügel 2, dessen Korpus 3 auf drei Standfüßen 4,5 und 6 steht, die in bekannter Weise lösbar mit der Korpusunterseite 7 verbunden sind. Die Standfüße 4,5 und 6 haben hierzu z.B. nicht weiter dargestellte Gewindebolzen, die in ortsfest an der Korpusunterseite 7 gelagerte Muttern eingreifen. Es sind auch schwalbenschwanzförmige Steckverbindungen zwischen dem Korpus 3 und den Standfüßen 4,5 und 6 möglich. Auf der klaviaturnahen Seite 8 hat der Flügel 2 eine Klappe 9, die sich in der Schließstellung befindet und die in diesem Falle nicht sichtbaren Tasten abdeckt. Deckseitig ist der Flügel 2 mit einem geteilten Deckel 10 versehen, dessen Deckelteile 11,12 durch ein Klavierband gegeneinander klappbar sind. Der Deckel 10, der über Scharniere 13,14 an der langen Wand 15 des Korpus 3 schwenkbar angeschlagen ist, kann vom Korpus 3 durch Ziehen der Stifte der Scharniere 13,14 abgenommen werden. Unterhalb der Klappe 9 sitzen die Tasten der Klaviatur in einem nicht weiter dargestellten Rahmen, der mit dem die Korpusunterseite 7 im vorderen Bereich bildenden Stuhlboden 16 verbunden ist. Am Stuhlboden 16 ist eine Lyra 16a befestigt, die das Pedalwerk 17 enthält.

Zum Transport des Flügels 2 muß dieser um 90' gekippt werden, 20 so daß seine lange Wand 15 parallel zur Standfläche des Flügels 2 in Fig. 1 verläuft. Hierzu wird die Kipp- und Transportvorrichtung 1 am Flügel 2 befestigt, wie die Fig. 1 erkennen läßt. Die Kipp- und Transportvorrichtung 1 hat einen im wesentlichen U-förmigen Träger 18 mit einer U-Basis 19 und zwei U-Schenken 20,21. Der U-förmige Träger 18 umgreift mit der U-Basis 19 und den U-Schenkeln 20,21 den Korpus 3 an der langen Wand 15 an drei Seiten. Der U-förmige Träger 18 weist eine Längsachse 22 auf, die der größten Abmessung der langen Wand 15 entsprechend ausgebildet ist. Vorzugsweise beträgt die Länge der Längsachse 22 etwa 80% der Länge der langen Wand 15.

Die U-Basis 19 des U-förmigen Trägers 18 ist auf ihrer dem Korpus 3 abgewandten Seite 23 mit drei Lenkrollen 24,25 und 35 26 ausgestattet, die gemeinsam eine Rollfläche definieren. In dem um 90 Grad gekippten Zustand entspricht die Rollfläche in Fig. 2 der Standfläche des Flügels 2 in Fig. 1.
Transversal zur Längsachse 22 des U-förmigen Trägers 18 orientiert ist mit diesem ein Rollkörper 27 lösbar verbunden, der scheiben- oder radartig geformt und ersichtlich sektorförmig ausgeführt ist. Der Radius R des Rollkörpers 27 ist etwa gleich groß wie die Höhe, vorzugsweise 5 - 10% kleiner als die Höhe eines der Standfüße 4,5 und 6, insbesondere aber des Standfußes 4. Der Rollkörper 27 hat eine annähernd viertelkreisförmige Außenkontur 28, die tangential in die von den Lenkrollen 24,25 und 26 definierte Rollfläche einläuft. Hierbei ist der Mittelpunk M und eine der Sektorkanten 29 des Rollkörpers 27 in der Ebene des zur Anlage mit der Korpusunterseite 7 bzw. mit dem Stuhlboden 16 bestimmten U-Schenkels 21 des Trägers 18 angeordnet. Der Träger 18 ist, wie im einzelnen weiter unten beschrieben wird, mit dem Korpus 3 durch Reibschluß lösbar verbunden.

Die Wirkungsweise der erfindungsgemäßen Kipp- und Transportvorrichtung 1 ergibt sich wie folgt:
Nach Herstellung eines Reibschlusses zwischen dem Korpus 3 einerseits und dem Träger 18 sowie dem damit lösbar verbundenen Rollkörper 27 andererseits wird der Korpus 3 zum Abschrauben des Standfußes 4 angehoben. Nach dem Entfernen des Standfußes 4 steht der Flügel 2 auf den beiden am Korpus 3 verbliebenen Standfüßen 5 und 6 einerseits und dem einen freien Ende 30 des Rollkörpers 27 andererseits, wobei das freie Ende 30 ein Teil der Außenkontur 28 ist. Wenn man den Flügel 2 sodann im Bereich der rechten vorderen Ecke 31 bzw. im Bereich des Standfußes 5 anhebt, beginnt der Flügel 2 zu kippen und rollt dabei auf der Aussenkontur 28 des Rollkörpers 27 solange ab, bis die Lenkrollen 24,25 die Kippbewegung begrenzen.
Während der Kippbewegung stützt sich der Flügel 2 auf seinem Standfuß 6 solange ab, bis die Lenkrolle 26 die Trag- und Stützfunktion übernimmt. In der nunmehr um 90' gekippten Lage kann der Rollkörper 27 durch Entriegeln vom Träger 18 gelöst werden. Der Flügel 2 kann sodann nach dem Lösen und Entfernen der Lyra 16a und der beiden Standfüße 5 und 6 auf den Lenkrollen 24,25 und 26 verfahren werden, wobei sich geringe Lenkradien und ein geringer Platzbedarf beim Rangieren des Flügels 2 ergeben.

Ersichtlich ist bei einer Ausführungsform nach Fig. 2 der U-förmige Träger 18 in Längsrichtung in zwei Trägerstücke 32,33 geteilt, die durch eine Teleskopstange 34 verbunden sind und auf Abstand gehalten werden. Der Abstand ist über 15 verschiedene Bohrungen 35 und einen Querbolzen 36 einstell-und fixierbar. Hiermit kann die Länge des Trägers 18 an die unterschiedliche Größe der langen Wand 15 bei kleinen Stutz- und großen Konzertflügeln angepaßt werden. Das erste Trägerstück 32 ist zur Aufnahme des klaviaturseitigen Endes 37 des Korpus 3 (vergleiche Fig. 1) bestimmt und weist mindestens zwei Lenkrollen 24,25 auf. Das zweite Trägerstück 33 ist zur Aufnahme des klaviaturfernen Endes 38 bestimmt und mit einer gegenüber den Lenkrollen 24,25 kleineren Lenkrolle 26 versehen.

Die Fig. 2 zeigt, daß der Rollkörper 27 mit dem ersten Trägerstück 32 lösbar verbunden ist. Hierzu hat der Rollkörper 27 einen transversal aus der Ebene des Mittelpunktes M und der Sektorkante 29 vorspringenden Dorn 39, der in eine quer zur Längsachse 22 des Trägers 18 angeordnete Buchse 40 der U-Basis 19 eingesteckt ist.

Durch das im beschriebenen Ausführungsbeispiel gewählte Vierkantprofil für den Dorn 39 und die Buchse 40 ist die 35 Verbindung verdrehungssteif. Der Dorn 39 ist im zusammengefügten Zustand zwischen dem Träger 18 und dem Rollkörper 27 durch einen Querbolzen 41 in der Buchse 40 verriegelt.

Die Figuren 2 bis 4 lassen erkennen, daß die U-Basis 19 des Trägers 18, beziehungsweise der Trägerstücke 32,33, mit einer Holzplatte 42, z.B. aus mehrschichtig verleimtem Buchenholz, versehen ist, die auf der dem Korpus 3 zugewandten Fläche 43 einen Filzbelag 44 trägt.

Auch die beiden U-Schenkel 20,21 sind auf den einander zugewandten Flächen 45,46 mit einem Filzbelag 47 ausgestattet. Der zweite U-Schenkel 21 des Trägers 18 bzw. der Trägerstücke 32,33, welcher der Korpusunterseite 7 abgewandt ist, ist quer zur Längsachse 22 des Trägers 18 verschiebbar und mittels einer an der U-Basis 19 verankerten Verstellschraube 48 bzw. 49 verstellbar geführt.

Zum Kippen und Transportieren eines Flügels mit abgenommenem Deckel 10 bzw. abgenom-menen Deckelteilen 11,12 trägt der zweite U-Schenkel 21 an seiner freien Endkante 50 eine Verstellvorrichtung 51, die zur reibschlüssigen Festlegung der deckelseitigen Kante der langen Wand 15 bestimmt ist. Hierzu ist die Verstellvorrichtung 51 auf der dieser deckelseitigen Kante zugewandten Seite mit einem Polster 52 versehen.

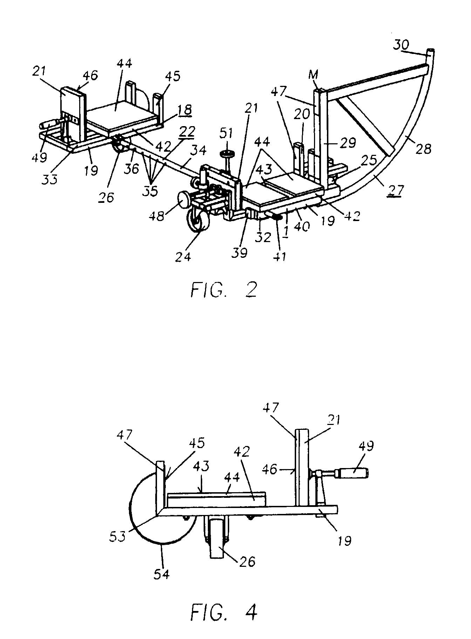

In Fig. 4 ist die zwischen der U-Basis 19 und dem U-Schenkel 20 gebildete Eckkante 53 mit einem Rollbügel 54 ausgestattet, der während der Kippbewegung die Korpusunterseite 7, insbesondere im Bereich des klaviaturfernen Endes 38, vor mechanischer Beschädigung schützt.

Zum Kippen und Transportieren eines Flügels mit abgenommenem Deckel 10 wird der verschiebbare U-Schenkel 21 mit der Verstellvorrichtung 51 entnommen und durch einen ähnlichen U-Schenkel 21a (ohne Verstellvorrichtung 51 ) ausgetauscht. Der U-Schenkel 21 a ist als Einzelheit in Fig. 5 schematisch dargestellt und für einen Austausch mit dem U-Schenkel 21 in Fig. 2 oder 3 bestimmt.

Anstelle der beschriebenen radförmigen Konstruktion des Rollkörpers 27 aus Metallprofilen, insbesondere Eisenprofilen, kann auch eine rad- oder scheibenförmige Ausführung des Rollkörpers 27 aus Holz zur Verwirklichung des Erfindungsgedankens herangezogen werden.

### Bezugszeichenliste:

- 1: Kipp- und Transportvorrichtung
- 2: Flügel
- 3: Korpus
- 4: Standfuß
- 5: Standfuß
- 6: Standfuß
- 7: Korpusunterseite
- 8: Klaviaturnahe Seite
- 9: Klappe
- 10: Deckel
- 11: Deckelteil
- 12: Deckelteil
- 13: Scharnier
- 14: Scharnier
- 15: lange Wand
- 16: Stuhlboden
- 16a: Lyra
- 17: Pedalwerk
- 18: Träger
- 19: U-Basis
- 20: U-Schenkel
- 21: U-Schenkel
- 21a: U-Schenkel
- 22: Längsachse
- 23: Seite
- 24: Lenkrolle
- 25: Lenkrolle
- 26: Lenkrolle
- 27: Rollkörper
- 28: Außenkontur
- 29: Sektorkante
- 30: Ende
- 31: Ecke
- 32: Trägerstück
- 33: Trägerstück
- 34: Teleskopstange
- 35: Bohrung
- 36: Querbolzen
- 37: klaviaturseitiges Ende
- 38: klaviaturfernes Ende
- 39: Dorn
- 40: Buchse
- 41: Querbolzen
- 42: Holzplatte
- 43: Fläche
- 44: Filzbelag
- 45: zugewandte Fläche
- 46: zugewandte Fläche
- 47: Filzbelag
- 48: Verstellschraube
- 49: Verstellschraube
- 50: freie Endkante
- 51: Verstellvorrichtung
- 52: Polster
- 53: Eckkante
- 54: Rollbügel
- R: Radius
- M: Mittelpunkt

## Patentansprüche

1. Kipp- und Transportvorrichtung (1) für einen Flügel (2), dessen Korpus (3) unterseitig mit drei Standfüßen (4,5,6) lösbar verbunden und auf seiner langen Wand (15) hochkant transportierbar und lagerfähig ist, **gekennzeichnet durch** einen im wesentlichen U-förmigen Träger (18), dessen U-Basis(19) und U-Schenkel (20,21) züm Umgreifen des Korpus (3) an10 der langen Wand (15) an mindestens drei Seiten bestimmt ist, dessen Längsachse (22) der größten Abmessung der langen Wand (15) entsprechend langgestreckt ausgebildet und dessen U-Basis (19) auf ihrer dem Korpus (3) abgewandten Seite (23) mit mindestens drei eine Rollfläche definierenden Lenkrollen15 (24,25,26) ausgestattet ist, **und durch** einen transversal zur Längsachse (22) des U-förmigen Trägers(18) orientierten und mit diesem lösbar verbundenen scheiben-oder radartigen, sektorförmigen Rollkörper (27) mit einem der Höhe eines Standfußes (4,5,6) entsprechenden Radius (R) und mit einer etwa viertelkreisförmigen Außenkontur (28), die tangential in die Rollfläche einläuft, wobei der Mittelpunkt (M) und eine Sektorkante (29) des Rollkörpers (27) in der Ebene des zur Anlage mit der Korpusunterseite (7) bestimmten U-Schenkels (20) des Trägers (18) angeordnet ist.

2. Kipp- und Transportvorrichtung nach Anspruch 1, **dadurch gekennzeichnet**, daß der U-förmige Träger (18) in Längsrichtung in zwei Trägerstücke (32,33) geteilt ist, die durch eine Teleskopstange (34) miteinander längsverstellbar und feststellbar verbunden sind.

3. Kipp- und Transportvorrichtung nach Anspruch 1 oder 2, **dadurch gekennzeichnet**, daß das erste (32) der Trägerstücke (32,33) zur Aufnahme des klaviaturseitigen Endes (37) des Korpus (3) bestimmt und mit mindestens zwei der Lenkrollen (24,25) ausgestattet ist.

4. Kipp- und Transportvorrichtung nach einem der Ansprüche 1 bis 3, **dadurch gekennzeichnet**, daß das zweite (33) der Trägerstücke (32,33) zur Aufnahme des klaviaturfernen Endes (38) des Korpus (3) bestimmt und mit mindestens einer der Lenkrollen (26) versehen ist.

5. Kipp- und Transportvorrichtung nach einem der Ansprüche 1 bis 4, **dadurch gekennzeichnet**, daß der Rollkörper (27) mit dem ersten (32) der Trägerstücke (32,33) lösbar verbunden ist.

6. Kipp- und Transportvorrichtung nach einem der Ansprüche 1 bis 5, **dadurch gekennzeichnet**, daß die U-Basis (19) des Trägers (18,) mit einer Holzplatte (47) aus mehrschichtig verleimtem Buchenholz ausgestattet ist, die auf der dem Korpus (3) zugewandten Fläche (43) mit einem Filzbelag (44) versehen ist.

7. Kipp- und Transportvorrichtung nach Anspruch 6, **dadurch gekennzeichnet**, daß die beiden U-Schenkel (20,21,21a) auf den einander zugewandten Flächen (45,46) einen Filzbelag (47) aufweisen.

8. Kipp- und Transportvorrichtung nach einem der Ansprüche 1 bis 7, **dadurch gekennzeichnet**, daß der erste, zur Anlage mit der Korpusunterseite (7) bestimmte U-Schenkel (20), starr mit der U-Basis (19) des Trägers (18) verbunden ist.

9. Kipp- und Transportvorrichtung nach einem der Ansprüche 1 bis 8, **dadurch gekennzeichnet**, daß der zweite, der Korpusunterseite (7) abgewandte U-Schenkel (21,21a), quer zur Längsachse (22) des U-förmigen Trägers (18) verschiebbar und mittels einer an der U-Basis (19) verankerten Verstellschraube (48) verstellbar geführt ist.
